# EUROPEAN PATENT APPLICATION

(11) **EP 1 462 957 A2**
(43) Date of publication of application: **29.09.2004**
(21) Application number: 04006438.8
(22) Date of filing: 17.03.2004
(51) Int. Cl.: G06F 17/30

(54) **Systems, methods, and apparatus for automated dimensional model definitions and builds utilizing simplified analysis heuristics**

(30) Priority: 28.03.2003 US 402026
(71) Applicant: MICROSOFT CORPORATION, Redmond, Washington 98052 (US)
(72) Inventor: Petculescu, Christian, Redmond Washington 98052 (US); Netz, Amir, Bellevue Washington 98005 (US)
(74) Representative: Grünecker, Kinkeldey, Stockmair & Schwanhäusser Anwaltssozietät

(57) **Abstract**

The present invention leverages interrelationships of a relational schema by utilizing simplified analysis heuristics to define and build dimensional models autornatically. A user can also participate interactively in both the definition and building processes to influence an outcome. The relational schema is comprised of relational databases and the like. The dimensional models are comprised of OLAP objects and the like such as ROLAP and MOLAP objects. A means is also provided for allowing a user to initiate *via* a single user action, such as a single computer mouse click, defining a dimensional model, building a dimensional model, *and*/*or* both defining and building a dimensional model.

## Description

### TECHNICAL FIELD

The present invention relates generally to data analysis, and more particularly to systems and methods for automatically generating and building a dimensional model based on a relational schema utilizing simplified analysis heuristics.

### BACKGROUND OF THE INVENTION

Modem society has come to depend heavily on computers and computer technology. It is especially prevalent in the business arena where companies compete fiercely for customers and product sales. A company with just-in-time inventory and well focused advertising strategies generally produces a product cheaper and delivers it faster to a customer than a competitor. Computer technology makes this type of business edge possible by networking businesses, information, and customers together. Although originally computers communicated to other computers *via* networks that only consisted of local area networks (LANs), the advent of the Internet has allowed virtually everyone with a computer to participate in a global network. This allows small businesses to be competitive with larger businesses without having to finance and build a network structure.

As computing and networking technologies become more robust, secure and reliable, more consumers, wholesalers, retailers, entrepreneurs, educational institutions and the like are shifting paradigms and employing networks, such as the Internet, to perform business instead of the traditional means. Many businesses are now providing web sites and on-line services. For example, today a consumer can access his/her account via the Internet and perform a growing number of available transactions such as balance inquiries, funds transfers and bill payment.

Typically businesses gather customer and business information and store it in large entities known as databases. These are collections of information organized so that a computer program can quickly select desired pieces of data. The databases can be astronomical in size and expand exponentially as technology allows more and more data to be collected. Generally, databases are organized by fields, records, and files. A field is a single piece of information: a record is one complete set of fields; and a file is a collection of records. A database management system (DBMS) is utilized to access information from the database. The DBMS is a group of programs that enables a user to enter, structure, and select data in a database.

As often occurs in business, there is always a push to increase profits and lower operating costs. Thus, Business Intelligence (B1) solutions were developed to aid in accessing information from large databases. Most businesses in recent times have migrated to relational type databases where data is interrelated. Data warehouses were developed to store tactical information to answer the "who" and "what" questions about the stored data related to previous events. However, this proved limiting due to the fact that data warehouses only have the capability of retrieving historical data. Therefore, on-line analytical processing (OLAP) systems were developed to not only answer the "who" and "what", but also the "what if" and "why" of the data. OLAP systems are multidimensional views of aggregate data that allow analysts, business managers, and executives and the like to gain insight into the information through a quick, reliable, interactive process. A main component of OLAP is an OLAP server, which is situated between a client and a DBMS. The OLAP server understands how data is organized in the database and has special functions for analyzing the data.

Analysis tools, including OLAP tools, help to reduce the access times to extreme amounts of data. By utilizing these tools, a user can ask general questions or "queries" about the data rather than retrieve all the data verbatim. Thus, "data about data" or metadata helps expedite the query process and reduce the required network bandwidth. Dimensional models, such as OLAP objects, play an important role in this type of analysis. The dimensional models are constructed or "built" from the data in the database. As is typical in most data analysis systems, the ending data supplied to a user depends heavily on the integrity of the dimensional model it is based upon. Thus, it is increasingly important that the dimensional model be built to accurately reflect information derived from the data in the database.

It stands to reason that when a database size increases, the dimensional model can also increase in size. This also increases the complexity of a required dimensional model. A user attempting to build the model will find a continuing challenge to ensure that it is constructed properly, requiring a great deal of time and effort. Add to this, the increasing complexity of a model having greater than three dimensions, numerous amounts of measures and intricate timing and the like, and it becomes a great undertaking. When a model is built, it must always contain information that can be employed to extract an answer to an end user's query. Thus, the structuring of the dimensional model or "cube'' is equally important. Different businesses require answers to different queries even though the database information may be similar. Different departments in the same business may also require different answers than other departments.

For a business to remain competitive, it must always strive to perform better than its competition. Utilizing smarter and more intuitive business solutions augment this performance. Dimensional modeling, like OLAP objects. is key to aiding businesses in their battle to be the best. It allows valuable and "hidden" information to be extracted from data stores which are not available without this analysis technique. As more and more businesses discover their hidden data, dimensional modeling will prove critical in the success of a business in a tight market place.

### SUMMARY OF THE INVENTION

The following presents a simplified summary of the invention in order to provide a basic understanding of some aspects of the invention. This summary is not an extensive overview of the invention. it is not intended to identify key/critical elements of the invention or to delineate the scope of the invention. Its sole purpose is to present some concepts of the invention in a simplified form as a prelude to the more detailed description that is presented later.

The present invention relates generally to data analysis, and more particularly to automatically generating and building dimensional models based on a relational schema utilizing simplified analysis heuristics. Analysis heuristics are leveraged to automatically create definitions of dimensional models and also to build dimensional models from the definitions. By automatically converting database information into a dimensional model such as OLAP objects like MOLAP (Multidimensional OLAP) *and*/*or* ROLAP (Relational OLAP) objects and the like, users gain an ability to construct the model with one click of a computer mouse *and*/*or* interactively influence the building of the model during its construction. The present invention also allows for automatically defining a model and allowing a user to change a definition interactively before building the model, providing a faster and a more user-friendly method and system of developing objects for use with OLAP tools.

The present invention also facilitates data analysis by reducing the required level of skill necessary to define a dimensional model and also reduces the amount of human error in the model definition. While relieving the tediousness of defining the model, the present invention also allows for user interaction so that advanced users can benefit from the automated features while still being able to influence the outcome, permitting a wider experience base of users without limiting expert users. The present invention also provides a multi-phased approached to allow the definition of the dimensional model to be controlled independently of the building of the dimensional model. In this fashion, all or part of a process can be automated *and*/*or* interactively influenced via a user interface. This flexibility drastically decreases the development time of a dimensional model and, at the same time, enables interactivity, allowing a user to quickly build a model and adapt it as necessary, maximizing user-friendliness, increasing model development speed, and providing reliable, high integrity OLAP objects.

To the accomplishment of the foregoing and related ends, certain illustrative aspects of the invention are described herein in connection with the following description and the annexed drawings. These aspects are indicative, however, of but a few of the various ways in which the principles of the invention may be employed and the present invention is intended to include all such aspects and their equivalents. Other advantages and novel features of the invention may become apparent from the following detailed description of the invention when considered in conjunction with the drawings.

### BRIEF DESCRIPTION OF THE DRAWINGS

FIG. 1 is a block diagram of a data analysis system in accordance with an aspect of the present invention.
FIG. 2 is a block diagram of phasing of a database analysis system in accordance with an aspect of the present invention.
FIG. 3 is a flow diagram of a method of constructing a dimensional model in accordance with an aspect of the present invention.
FIG. 4 is a flow diagram of a method of defining a dimensional model in accordance with an aspect of the present invention.
FIG. 5 is a flow diagram of a method of building a dimensional model in accordance with an aspect of the present invention.
FIG. 6 is a table of a software process of interfacing with a user in accordance with an aspect of the present invention.
FIG. 7 is a screen shot of a welcome user interface in accordance with an aspect of the present invention.
FIG. 8 is a screen shot of a cube definition user interface in accordance with an aspect of the present invention.
FIG. 9 is a screen shot of a data source selection user interface in accordance with an aspect of the present invention.
FIG. 10 is a screen shot of a table type detection user interface in accordance with an aspect of the present invention.
FIG. 11 is a screen shot of a table type selection user interface in accordance with an aspect of the present invention.
FIG. 12 is a screen shot of an existing dimensions user interface in accordance with an aspect of the present invention.
FIG. 13 is a screen shot of a measure selection user interface in accordance with an aspect of the present invention.
FIG. 14 is a screen shot of a dimension hierarchies creation user interface in accordance with an aspect of the present invention.
FIG. 15 is a screen shot of a time period definition user interface in accordance with an aspect of the present invention.
FIG. 16 is a screen shot of a newly-created dimensions user interface in accordance with an aspect of the present invention.
FIG. 17 is a screen shot of a finishing a cube creation user interface in accordance with an aspect of the present invention.
FIG. 18 is a screen shot of a new manual measure definition user interface in accordance with an aspect of the present invention.
FIG. 19 is a screen shot of manual existing dimensions user interface in accordance with an aspect of the present invention.
FIG. 20 is a screen shot of a new manual dimensions definition user interface in accordance with an aspect of the present invention.
FIG. 21 is a screen shot of a manual time period definition user interface in accordance with an aspect of the present invention.
FIG. 22 illustrates an example operating environment in which the present invention can function.
FIG. 23 illustrates another example operating environment in which the present invention can function.

### DETAILED DESCRIPTION OF THE INVENTION

The present invention is now described with reference to the drawings, wherein like reference numerals are used to refer to like elements throughout. In the following description, for purposes of explanation. numerous specific details are set forth in order to provide a thorough understanding of the present invention. It may be evident, however, that the present invention may be practiced without these specific details. In other instances, well-known structures and devices are shown in block diagram form in order to facilitate describing the present invention.

As used in this application, the term "component" is intended to refer to a computer-related entity, either hardware, a combination of hardware and software, software, or software in execution. For example, a component may be, but is not limited to being, a process running on a processor, a processor, an object, an executable, a thread of execution, a program, *and*/*or* a computer. By way of illustration, both an application running on a server and the server can be a computer component. One or more components may reside within a process *and*/*or* thread of execution and a component may be localized on one computer *and*/*or* distributed between two or more computers. A "thread" is the entity within a process that the operating system kernel schedules for execution. As is well known in the art, each thread has an associated "context" which is the volatile data associated with the execution of the thread. A thread's context includes the contents of system registers and the virtual address belonging to the thread's process. Thus, the actual data comprising a thread's context varies as it executes.

In order for an OLAP system to operate, it needs a dimensional object or "model" from which to draw information from. The dimensional object is generally derived from a database and can contain more than three dimensions. Typically, dimensional objects are referred to as "cubes." This provides a simple illustration when referring to a dimensional object. The OLAP system retrieves information from the dimensional objects when a query from a user is submitted. Thus, success of the OLAP system in replying to queries weighs heavily upon having a good, well-structured dimensional object or model. A poorly constructed model can slow query response time *and*/*or* not allow the OLAP system to have the capability to respond correctly to the query. Generally speaking, a user constructing a model must be very knowledgeable about both the database being employed and the types of queries the OLAP system will be called upon to answer. This can be a long and tedious effort for even a highly skilled user.

The present invention allows a dimensional model to be defined and constructed with a single user action. It also allows a user to interact with the process to influence the outcome of the definition *and*/*or* the build. Thus. a lesser experienced user can have a dimensional model or "cube" defined and built with a single mouse click. An advanced user, however, still has the capability to influence the defining of the cube *and*/*or* the building of the cube on an interactive level. This allows the cube to be tailored as the user sees fit. A typical business employing the present invention saves time and money developing an OLAP system that meets its business objectives due to the present invention's ease of use and flexibility in skill level required to operate it. This reduces costs and complexities of providing business information, allowing the possibility of eliminating a need to hire experts to construct a proper dimensional model. The dimensional model can then be tweaked as necessary to formulate a data analysis system that meets the business needs of the user.

Typically, databases are relational in nature meaning that the data has links to other data that resides in the database. The present invention employs simplified analysis heuristics to exploit these links from relational schema such as a relational database. In this manner, a cube or dimensional model definition is constructed. Once the definition is completed, the present invention builds a cube based on the cube definition. Both phases can be done automatically without any user intervention. However, it is also possible for the user to interact with both phases of the present invention. This provides both a "one click" solution (*e.g.*, one click of a computer mouse) and an interactive solution for increased flexibility.

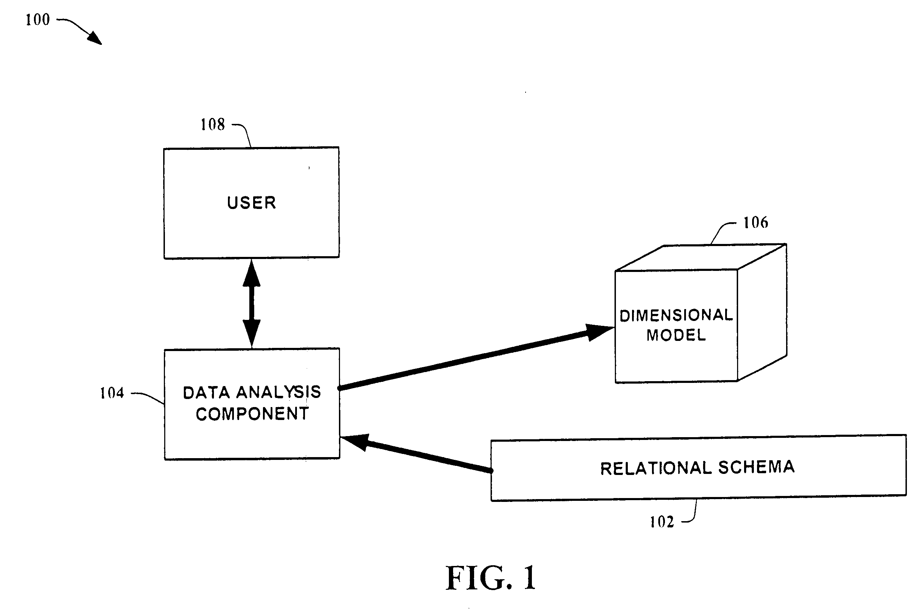

In FIG. 1, a block diagram of a data analysis system 100 in accordance with an aspect of the present invention is illustrated. The data analysis system 100 is comprised of a relational schema 102, such as a relational database and the like, a data analysis component 104, a dimensional model 106 or cube, such as an OLAP object and the like, and a user interface 108. The data analysis component 104 processes data from the relational schema 102 to create the dimensional object 106. This is accomplished by first defining a dimensional model and then building the dimensional model 106 from that definition. The user interface 108 allows for a user to interact with the processing taking place in the data analysis component 104. This allows the user to redefine a dimensional model definition *and*/*or* influence how the dimensional model 106 is constructed. It also allows a user to simply perform a single user action, such as a computer mouse click and the like, to initiate the data analysis component 104 to automatically define the dimensional model 106 *and*/*or* to construct the dimensional model 106. Thus. a lesser experienced user can utilize the present invention with a minimal amount of effort. Likewise, an expert user can still interact with the present invention and influence the process as they see fit. The relational schema 102 is comprised of data that has interrelations with other data found in the relational schema 102. It is these relations that are leveraged to formulate a dimensional model using simplified analysis heuristics.

Relational databases store data in tables that are two dimensional. The tables have rows (records or objects) and columns (fields or attributes). Data items at an intersection of a row and a column are called a cell and consist of attribute values. Multiple values are not stored in a single cell. Relational database tables are "normalized" so data is not repeated more often than is necessary. The table columns depend on a primary key, *pk*, (a unique value in the column) to identify the column. Once a specific column is identified, data from one or more rows associated with that column may be obtained or changed. Foreign keys, *fk*, are primary keys to information in other tables that relate to the information associated with a table having the primary key of concern.

The relationships between several entities such as primary keys and foreign keys can be mapped to express cardinality. For binary relationship sets between entity sets, the mapping cardinality can be one-to-one, one-to-many, many-to-one. and many-to-many. The relationships between a primary key, *pk,* (to represent one of the "many") and a foreign key, *fk*, can be expressed as *fk*/*pk* pairs. Graphically, the relationship can be drawn as an "arc" between the primary key and the foreign key. Directionality can be indicated by utilizing arrows on the arc to show whether the relationship directionality is "in" or "out".

Likewise, dimensional models have characteristics or parameters that help define their structure, such as a tuple. The tuple is used to define a slice of data from a cube. It is composed of an ordered collection of one member from one or more dimensions. The tuple is used to identify specific sections of multidimensional data from the cube. It can be composed of one member from each dimension in a cube to completely describe a cell value.

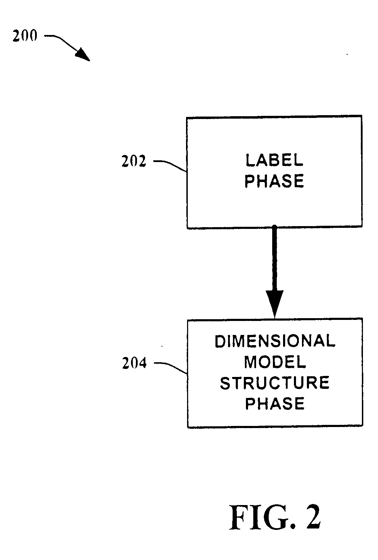

Turning to FIG. 2, a block diagram of phasing 200 of a database analysis system in accordance with an aspect of the present invention is shown. In one aspect of the present invention, processing is broken down into two phases. Thus, the phasing 200 is comprised of a label phase 202 and a dimensional model structure phase 204. The labeling phase 202 is comprised of processing that utilizes simplified analysis heuristics to define a dimensional model. This includes, but is not limited to, analyzing interrelations between data in a relational schema. For example, an associated graph of the relational schema is defined as being a "tuple (*V, A,f*)", where *V* is a set of vertexes for every table found in the schema, A is a set of arcs for every relationship in the schema, and *f* is a function where *f*(*v1, v2*) = a12 (where *v* represents a member of set *V* and *a* represents a member of set *A*), if and only if there is a relationship between tables associated with *v1* and *ν2* (named *t1* and *t2*, respectively) and the relationship is *t1:t2* = *n:1*, where *n* represents an integer from one to infinity. A "label" is then defined for each structure, such as a table, based on characteristics of an arc from pair of foreign key/primary key (fk/pk) connections from the associated structures (*e.g.*, tables). Details of labeling are described *infra.*

In another instance of the present invention, the dimensional model structure phase 204 is comprised of building a dimensional model as defined during the label phase 202. Thus, the present invention can build a cube (dimensional model) automatically based on this definition. However, in other aspects of the present invention, a user can intercede and augment *and*/*or* change the definition before the cube is constructed. This allows the user to interact with the phasing 200 as much or as little as is needed *and*/*or* desired. The actual details of constructing a dimensional object are discussed *infra.*

In yet another instance of the present invention, a data analysis system is comprised of a means for utilizing simplified analysis heuristics for defining a dimensional model based on data interrelations from a relational data schema, means for building the dimensional model defined by the automated structure labeling system, means to allow a user to interact with the automated structure labeling system *and*/*or* the automated model building system, and means for allowing a user to initiate with a single user action the automated structure labeling system *and*/*or* the automated model building system.

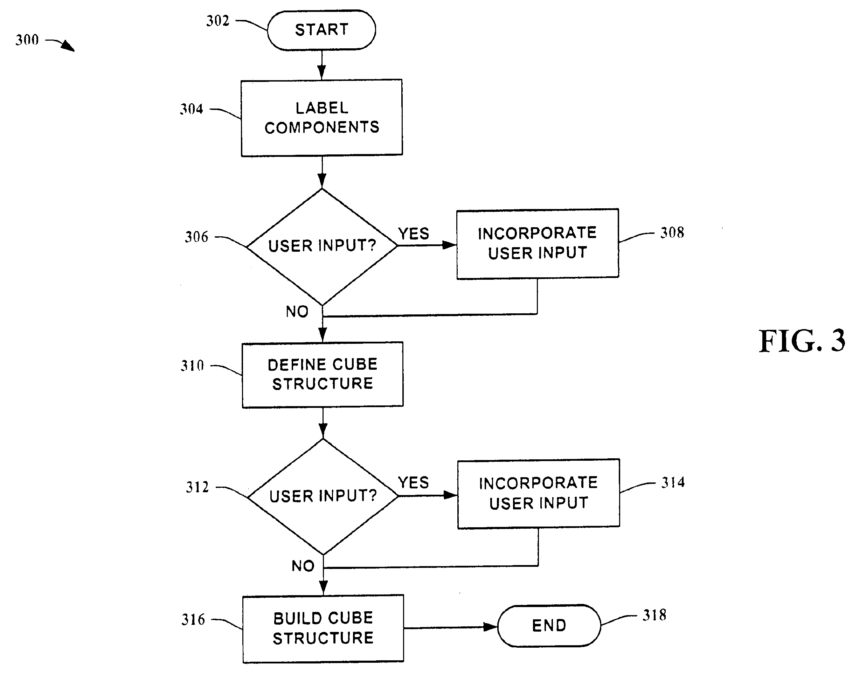

In view of the exemplary systems shown and described above, methodologies that may be implemented in accordance with the present invention will be better appreciated with reference to the flow charts of FIGs. 3-5. While, for purposes of simplicity of explanation, the methodologies are shown and described as a series of blocks, it is to be understood and appreciated that the present invention is not limited by the order of the blocks, as some blocks may, in accordance with the present invention, occur in different orders *and*/*or* concurrently with other blocks from that shown and described herein. Moreover, not all illustrated blocks may be required to implement the methodologies in accordance with the present invention.

The invention may be described in the general context of computer-executable instructions, such as program modules, executed by one or more components. Generally, program modules include routines, programs, objects, data structures, *etc*. that perform particular tasks or implement particular abstract data types. Typically the functionality of the program modules may be combined or distributed as desired in various embodiments.

To allow great flexibility in the present invention, user interactions can be incorporated to influence a resulting dimensional model. In FIG. 3, a flow diagram of a method 300 of constructing a dimensional model in accordance with an aspect of the present invention is illustrated. The method 300 starts 302 by labeling components of a relational schema 304, such as tables in a relational database and the like. A determination is made as to whether any user input is available regarding the labeling of the components 306. If user inputs are available, the user inputs are incorporated 308 and a cube structure is defined 310. If, however, inputs are not available, the cube structure is defined 310 from the labels of the components without any user input. Once the cube structure is defined 310, a determination is made as to whether any user inputs are available relating to the cube's definition 312. If user inputs are available, they are incorporated into the cube's definition 314 and the cube is built 316, ending the flow 318. If no user inputs relative to the cube's definition are available 312, the cube is built 316 using the cube definition without any user inputs, ending the flow 318. Although this aspect of the present invention is illustrated with discrete points at which user inputs are accepted, other aspects of the present invention can accept user inputs at any point during processing for, up to and including, a 100% interactive capability. Likewise, the process can be totally automated with no interactive participation by a user.

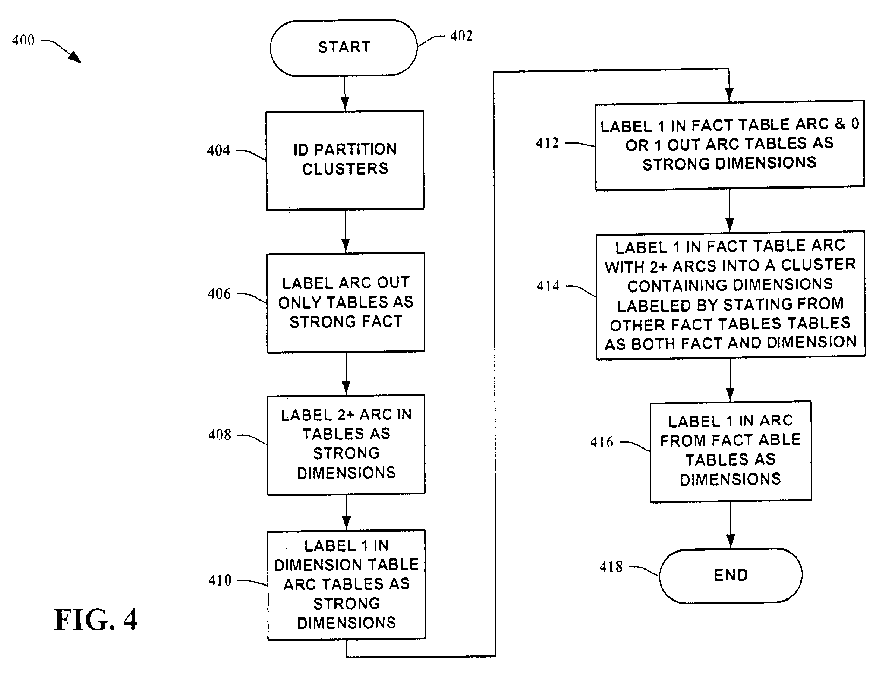

In order to define a dimensional model according to one aspect of the present invention, structures, such as tables and the like, pertinent to a database must be labeled to aid in building a dimensional model. Referring to FIG. 4, a flow diagram of a method 400 of defining a dimensional model in accordance with an aspect of the present invention is depicted. The method 400 starts 402 by identifying partition clusters 404. All vertexes that have only "out" arcs are reviewed to identify those structures that have equivalent labeling (*i.e.,* same *pk,* same cardinalities of columns with measure types not used in an *fk*/*pk* pair). Partitions are grouped into detail clusters and are analyzed as a single vertex. Only when actually building a cube are appropriate partitions created. All structures with only "out" arcs are then labeled as *strong fact* 406. All structures with two or more "in" arcs are labeled as *strong dimensions* 408. All structures with one "in" arc from a dimension are labeled as *strong dimensions* 410. All structures with one "in" arc from a fact table and zero or one "out" arc are labeled as *strong dimensions* 412. All structures with exactly one "in" arc from a fact structure and two or more arcs going into a cluster that contains dimensions labeled as starting from other fact structures are labeled as both *dimensions* and *facts* 414. All structures with one "in" arc from a fact table are labeled as *dimensions* 416, ending the flow 418. The structures are comprised of tables and the like as found in relational schemas such as relational databases and the like. Table types can include fact tables, degenerate tables. and dimension tables. Those skilled in the art can appreciate that other aspects of the present invention can include methods having more or fewer steps as noted *supra* and still be within The scope of the present invention. It should also be noted that a user can interact at any point during this process.

It can also be appreciated that in other instances of the present invention, a user can edit *and*/*or* augment a structure labeling schema. This allows the user an advanced level of interaction in which they can influence rules that govern the labeling of structures during a definition phase of constructing a dimensional model. In this manner, the labeling schema can be tweaked to provide a tuned process for automatically constructing dimensional models. It is also possible in yet another instance of the present invention to permit a user to determine a user interaction level to determine an amount of interactivity permitted during a dimensional model construction. Such levels can include, but are not limited to, total automation. limited interaction, *and*/*or* full interaction (e.g., manual) type modes. These modes or levels are not limited to only the labeling and definition processing, but can also be applied to building the dimensional model described *infra*.

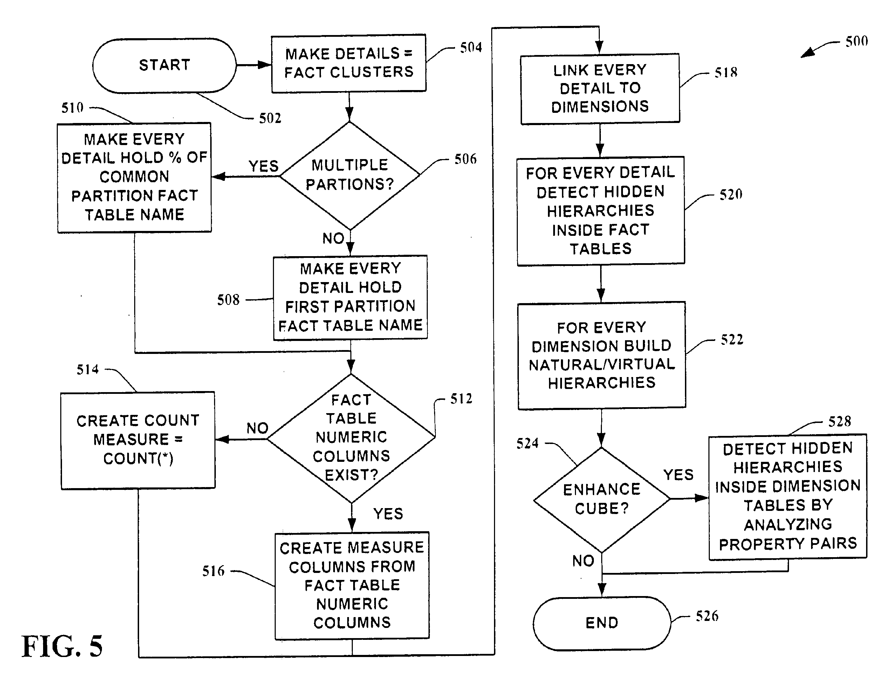

Typically, after a definition has been derived from a database and any user inputs have been accounted for, another aspect of the present invention builds a dimensional model based on the derived definition. Looking at FIG. 5, a flow diagram of a method 500 of building a dimensional model in accordance with an aspect of the present invention is shown. The method 500 starts 502 with creating a cube with as many details as there are fact clusters 504. A determination is then made as to whether multiple partitions exist 506. If only one partition exists and if every detail holds a name of a fact table it hosts, the name utilized is the name of the first and only partition 508. If multiple partitions exist and if every detail holds a name of a fact table it hosts, the name is a variable percentage length of a common substring of the fact table name 510. A determination is then made as to whether numeric columns of a fact table exist 512. If no numeric columns exist, a count measure is created with an expression of "count(*)'' 514. If, however, numeric columns do exist, the numeric columns of a fact table are measure columns and measures are created for them 516. Once this is accomplished, all details are linked to dimensions 518. Hidden time dimensions inside fact tables are then detected for every detail 520. This includes time columns that span into time dimensions with an "(All)-Y-Q-M hierarchy," representing yearly, quarterly, and monthly, respectively. Natural *and*/*or* virtual hierarchies are then built for every dimension 522. A determination is then made as to whether it is desired to enhance the cube structure 524. If not, the flow ends 526. If it is desirable to enhance the cube structure, hidden hierarchies inside the dimension tables are detected by analyzing *interesting pairs* (*i.e.,* pairs that are typically associated as occurring together) of dimension properties 528. ending the flow 526.

The aforementioned flows are meant to be representative flows of various methods of the present invention. They in no way encompass every iteration and variance within the scope of the present invention. Those skilled in the art can appreciate that a method can incorporate modifications and still remain within the purview of the present invention.

The present invention allows user interaction at any desired level. This permits a novice user to initiate an automated process with a single user action and also allows an expert user to intercede at will to fine tune a dimensional model for specific needs. One method of allowing this level of user interactivity is to provide a graphical style user interface. A user can then initiate, change, review, *and*/*or* augment the present invention easily. One skilled in the art can appreciate that a multitude of varying graphical interfaces are possible. As an example of just one possible interface of the present invention, an illustration of a graphical user interface set or "process" is described. Generally, a user interface is comprised of at least one graphic, often a set of graphics, that is generated by a computing device and shown on a display for visual reference and interaction by the user. This set of graphics is typically referred to as a "graphical user interface" (GUI) even though it is comprised of more than one graphic. Thus, components such as sub-graphics, drop down menus and tables, selection devices, and text entry boxes and the like are all considered part of the graphical user interface.

Likewise, the present invention also includes non-graphical user interfaces such as text based user interfaces. Although generally not as easy to interface with as a graphical interface, a text based interface can still be employed by the present invention to allow user interaction at any level and to also allow a single user action, such as a key stroke, to initiate an automated process.

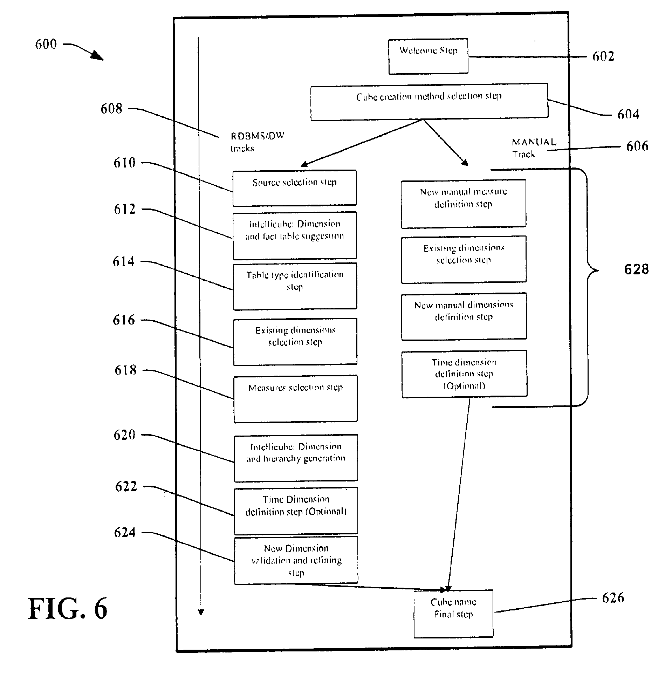

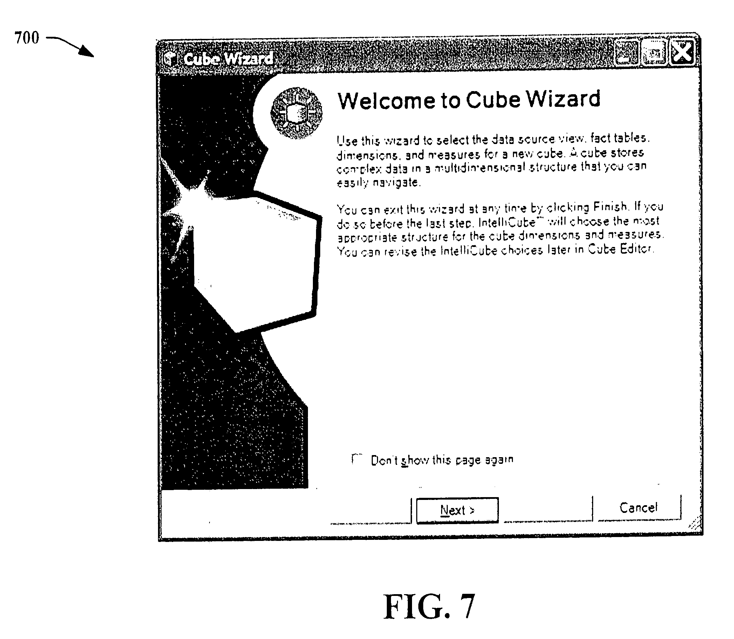

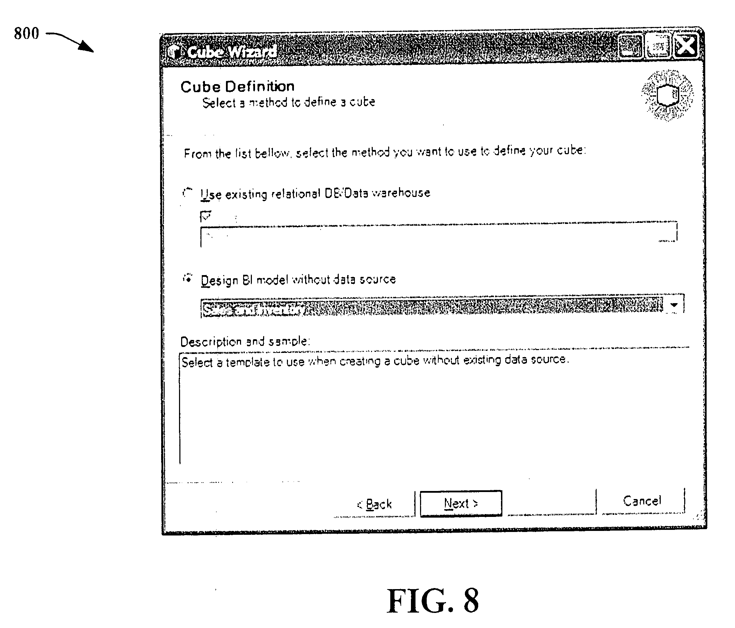

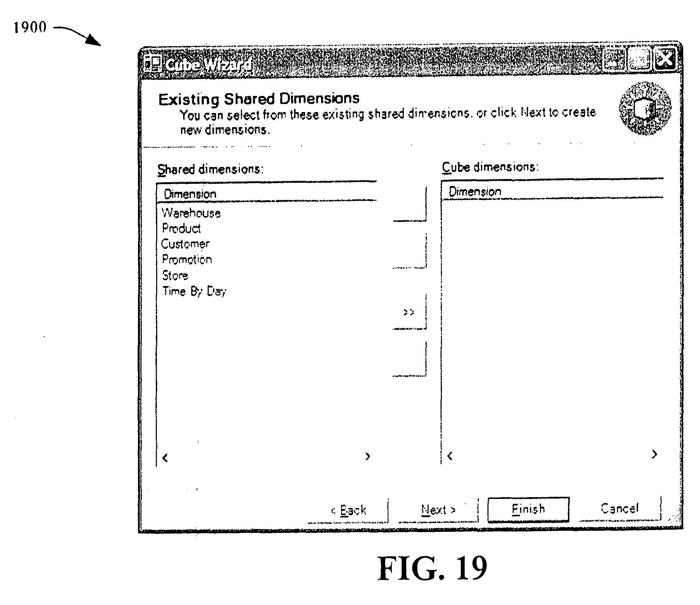

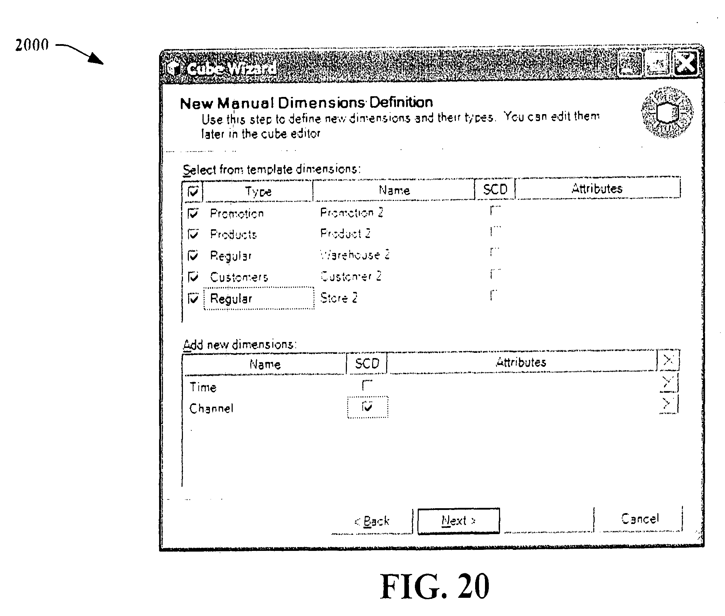

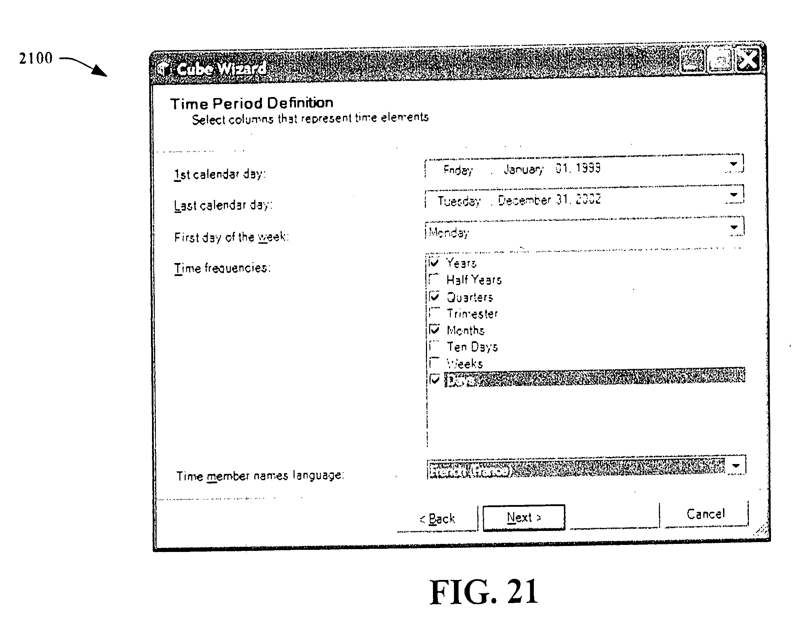

Turning to FIG. 6, a table of a graphical user interface process 600 of interacting with a user in accordance with an aspect of the present invention is illustrated. This process 600 illustrates an overview of different graphical interfaces that can be employed in the present invention. Examples of actual screen shots of these interfaces are shown in FIGs. 7-21. In general, a welcome step 602 brings up a screen to welcome a user such as a user interface 700 illustrated in FIG. 7. This interface 700 explains the purpose of an aspect of the present invention and prepares a user for interacting with it. A cube creation method interface step 604 then allows a user to select a manual track 606 or an automatic/semiautomatic track 608 (RDBMS/DW tracks, relational database management system and data warehouse, respectively). A graphical user interface 800 in FIG. 8 depicts an example of such an interface. At this interface, a user can choose to accept suggestions (interact with the present invention) during a definition and cube building process. Typically, default is set to allow suggestions (i.e., allow a user to interact).

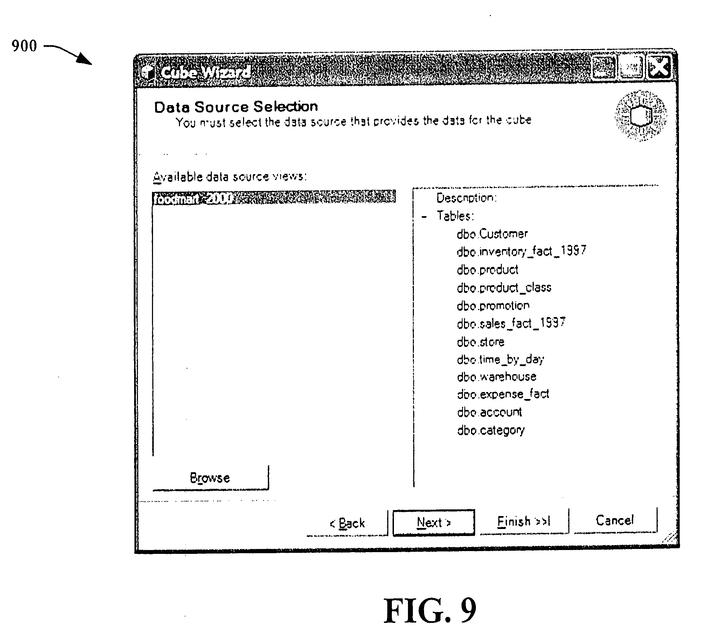

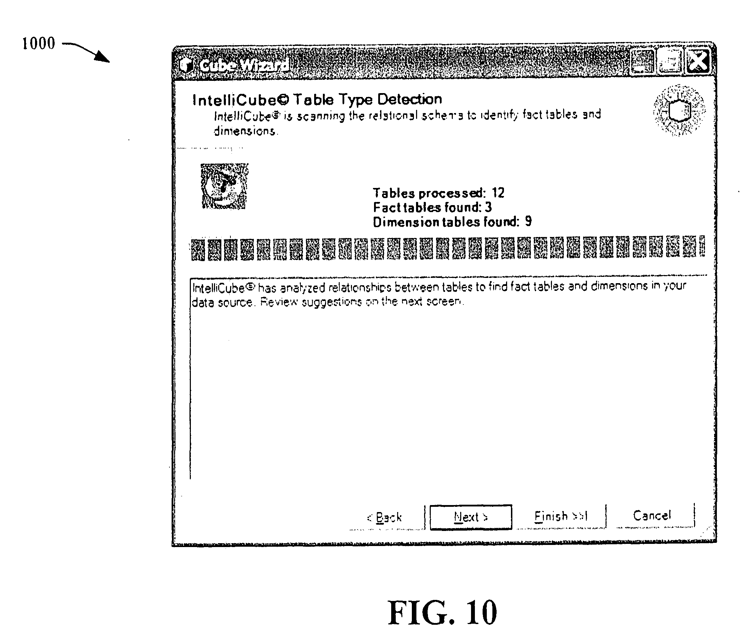

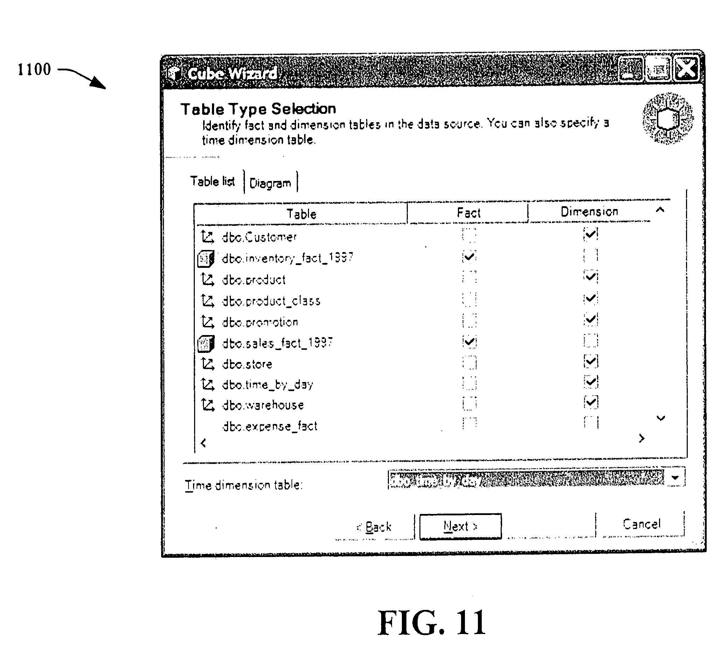

If the automatic/semiautomatic track is chosen, the user is presented with a source selection capability 610 like that shown in FIG. 9's user interface 900. The user can select a desired data source to base the cube processing upon. Once a source has been selected, a user is presented with results from processing that identifies relationships and primary and foreign keys and suggests potential fact tables, dimension tables and hierarchies for those dimensions 612. Generally, the information is provided to a user as the processing discovers them as illustrated in a graphical user interface 1000 shown in FIG. 10. The process automatically detects and suggests a table type for each of the tables of the selected data source 614. The user can then select only the tables required for creating the cube. Such an interface is depicted in a graphical user interface 1100 shown in FIG. 11. In other instances of the present invention (not shown), a diagram graphical user interface, as opposed to a table graphical user interface, can be presented to a user.

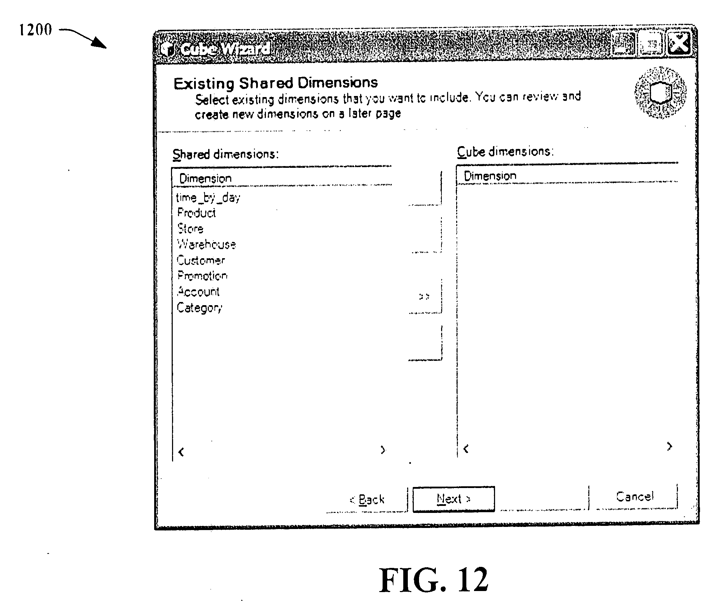

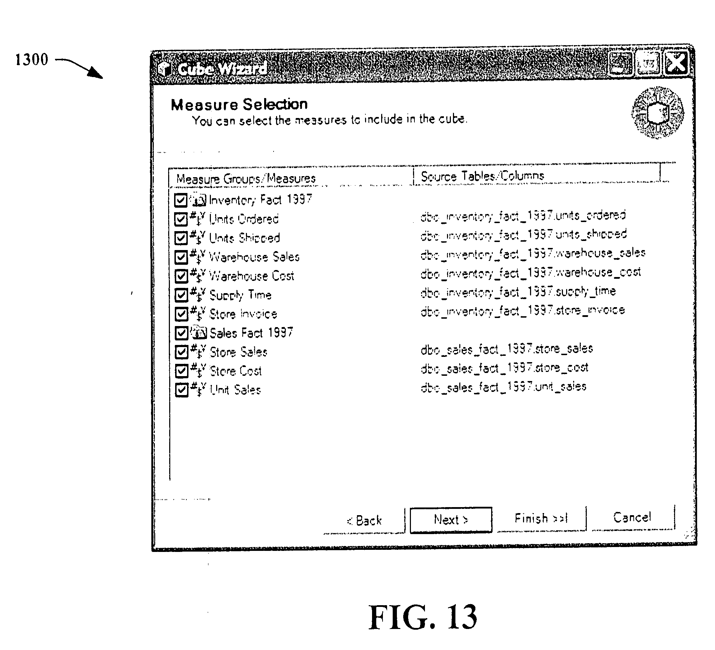

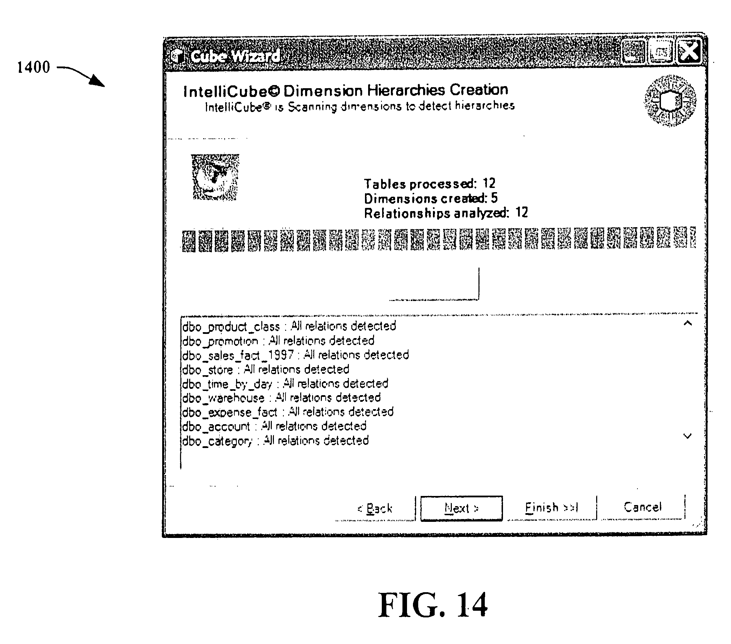

After the tables are selected, a user can then select and add to the cube definition dimensions that were previously created 616 *via* a graphical user interface 1200 as shown in FIG. 12. The process 600 then takes information from an analysis and reports to the user suggestions for measure columns from the previously supplied data. The user can also refine this data, for example, *via* a graphical user interface 1300 depicted in FIG. 13. Typically, measures are automatically grouped by a measure group function. This function groups the measures by topic and dimensional granularity. Generally. a default name of the grouping is a human readable version of the table name (*e.g.,* underscoring is removed from the name). It is also possible to rename measure groups *via* the graphical user interface 1300. The process 600 then provides a user with results from an analysis that creates dimensions and hierarchies 620. Such a graphical user interface 1400 is depicted in FIG. 14. The user can stop the analysis at any time and proceed with just the hierarchies generated up to that point in time. The analysis detects hierarchies for all dimension tables that remain after a filtering generated by an existing dimension list. All dimension tables used by any existing dimension added to the cube are removed from a list of potential dimension tables to generate a dimension for. If another dimension table finds itself isolated from all fact tables (no direct link or no links through any other remaining dimension tables), it is also removed from the dimension table list. Once this process is completed, a dimension list is created from the remaining dimensions.

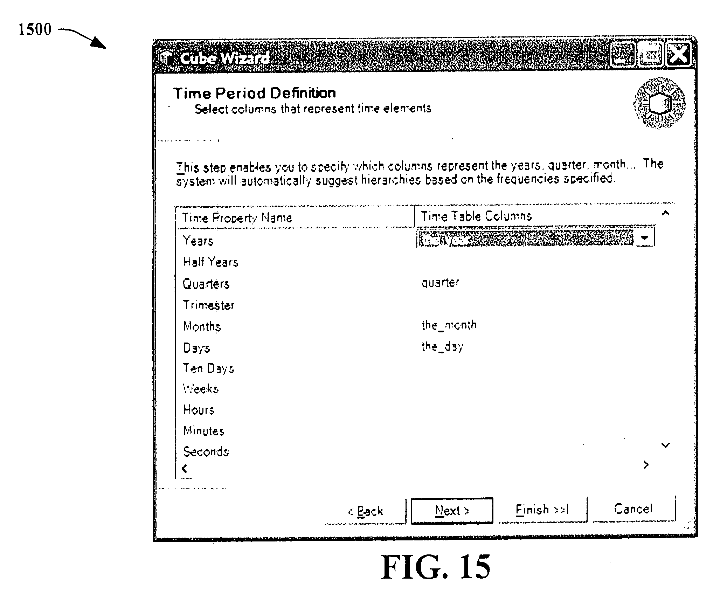

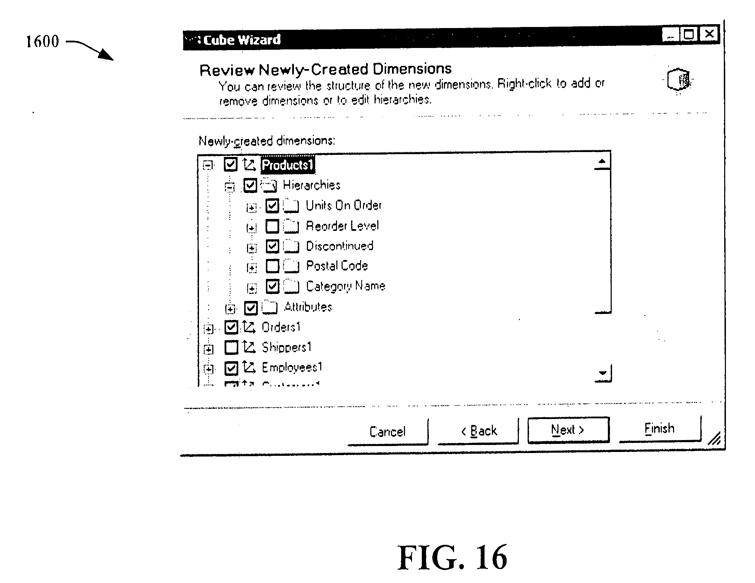

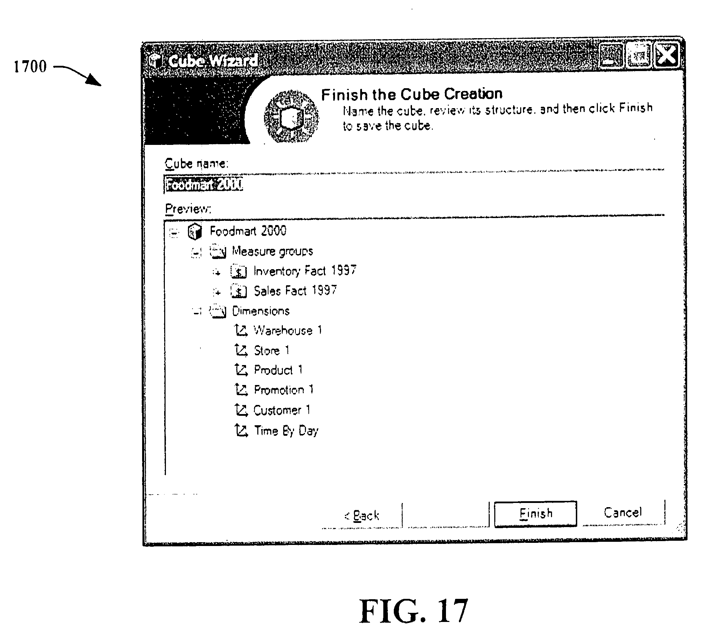

As an optional step, a user can be provided with a graphical user interface to specify which column contains time interval periods for a table defined as "time" in a previous selection 622. A graphical user interface 1500 illustrated in FIG. 15 shows an example of how this can be presented to a user. A user is then presented with a graphical user interface to relay information from an analysis which automatically generates hierarchies and properties for a new dimension 624. The user can refine these parameters in an interface such as a graphical user interface 1600 shown in FIG. 16. The user has a capability to create additional dimensions *and*/*or* to edit ones automatically supplied by the analysis. Once all parameters are satisfied for the analysis, the user is presented with a graphical user interface to finalize the cube 626. For example, a graphical user interface 1700 show in FIG. 17 allows the user to name the cube. review its structure and save the cube.

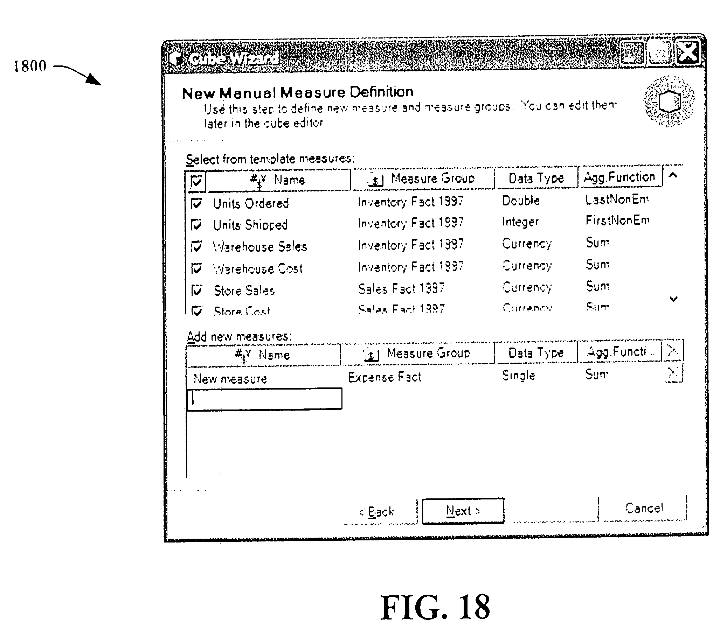

The above discussion concerns a user who desires to interact with an automated process. However. a user can also manually construct a cube and is still supported by graphical user interfaces as noted in the process 600 shown in FIG. 6. The manual track 606 includes interfaces 628 comprised of a creating a new manual measure definition interface, a selecting existing dimensions interface, a creating new manual dimension definitions interface, and an optional defining a time dimension interface. Typical graphical user interfaces are depicted in FIGs. 18-21 denoted by graphical user interfaces 1800-2100 respectively. Thus, the present invention allows a user to have great flexibility as to a level of involvement and skill required by a user. This allows a tremendous advantage by employing the present invention.

Thus. one aspect of the present invention is comprised of an interface adapted to communicate with an automated data analysis system, at least one output associated with the interface to provide indications of data processing within the data analysis system relating to at least one characteristic, and at least one input to influence the data processing based, at least in part, on a user's preference of how to define a dimensional model *and*/*or* how to construct a dimensional model. In another aspect of the present invention, the automated data analysis system is comprised of an automated structure labeling system utilizing simplified analysis heuristics for defining a dimensional model based on data interrelations from a relational data schema and an automated model building system for constructing the dimensional model defined by the automated structure labeling system. In yet another instance of the present invention, the output is comprised of dimensions, attributes, aggregate functions, table types, measures, *and*/*or* measure groups. In still yet another instance of the present invention, the input is comprised of dimensions, attributes, aggregate functions, table types, measures, *and*/*or* measure groups. In yet other instances of the present invention is further comprised of an input to initiate *via* a single user action such as the automated structure labeling system *and*/*or* the automated model building system.

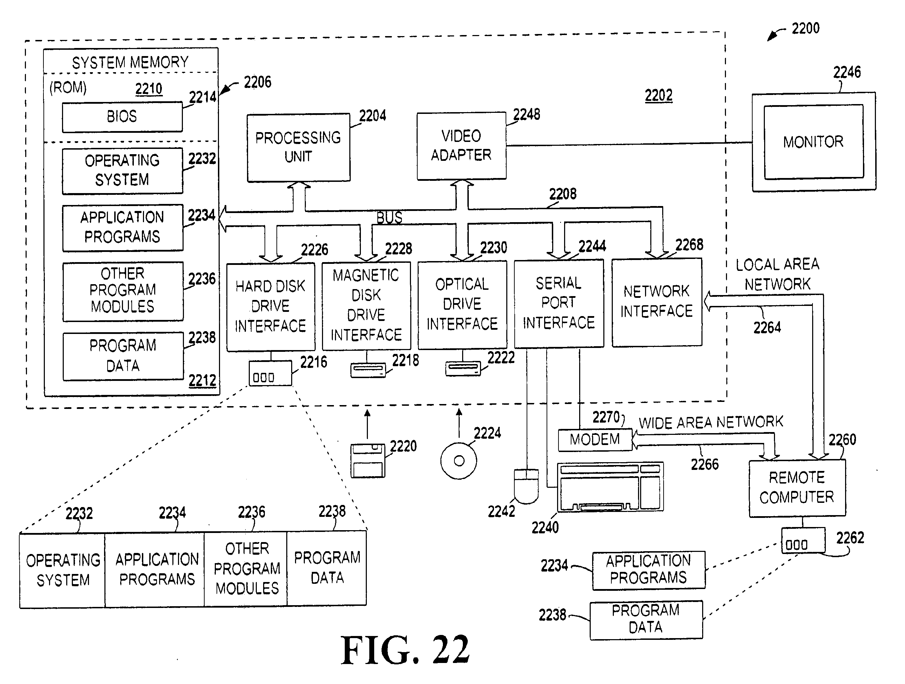

In order to provide additional context for implementing various aspects of the present invention. FIG. 22 and the following discussion is intended to provide a brief, general description of a suitable computing environment 2200 in which the various aspects of the present invention may be implemented. While the invention has been described above in the general context of computer-executable instructions of a computer program that runs on a local computer *and*/*or* remote computer, those skilled in the art will recognize that the invention also may be implemented in combination with other program modules. Generally, program modules include routines, programs, components, data structures. *etc.* that perform particular tasks *and*/*or* implement particular abstract data types. Moreover, those skilled in the art will appreciate that the inventive methods may be practiced with other computer system configurations, including single-processor or multi-processor computer systems. minicomputers, mainframe computers, as well as personal computers, hand-held computing devices, microprocessor-based *and*/*or* programmable consumer electronics, and the like, each of which may operatively communicate with one or more associated devices. The illustrated aspects of the invention may also be practiced in distributed computing environments where certain tasks are performed by remote processing devices that are linked through a communications network. However, some, if not all, aspects of the invention may be practiced on stand-alone computers. In a distributed computing environment, program modules may be located In local *and*/*or* remote memory storage devices.

As used in this application, the term "component" is intended to refer to a computer-related entity, either hardware, a combination of hardware and software, software, or software in execution. For example, a component may be, but is not limited to, a process running on a processor, a processor, an object, an executable, a thread of execution, a program, and a computer. By way of illustration, an application running on a server *and*/*or* the server can be a component. In addition, a component may include one or more subcomponents.

With reference to FIG. 22, an exemplary system environment 2200 for implementing the various aspects of the invention includes a conventional computer 2202. including a processing unit 2204. a system memory 2206, and a system bus 2208 that couples various system components, including the system memory, to the processing unit 2204. The processing unit 2204 may be any commercially available or proprietary processor. In addition, the processing unit may be implemented as multi-processor formed of more than one processor, such as may be connected in parallel.

The system bus 2208 may be any of several types of bus structure including a memory bus or memory controller. a peripheral bus, and a local bus using any of a variety of conventional bus architectures such as PCl, VESA, Microchannel, ISA, and EISA, to name a few. The system memory 2206 includes read only memory (ROM) 2210 and random access memory (RAM) 2212. A basic input/output system (BIOS) 2214, containing the basic routines that help to transfer information between elements within the computer 2202, such as during start-up, is stored in ROM 2210.

The computer 2202 also may include, for example, a hard disk drive 2216, a magnetic disk drive 2218, *e.g.,* to read from or write to a removable disk 2220, and an optical disk drive 2222, *e.g.*, for reading from or writing to a CD-ROM disk 2224 or other optical media. The hard disk drive 2216, magnetic disk drive 2218, and optical disk drive 2222 are connected to the system bus 2208 by a hard disk drive interface 2226, a magnetic disk drive interface 2228. and an optical drive interface 2230, respectively. The drives 2216-2222 and their associated computer-readable media provide nonvolatile storage of data, data structures, computer-executable instructions, *etc*. for the computer 2202. Although the description of computer-readable media above refers to a hard disk, a removable magnetic disk and a CD, it should be appreciated by those skilled in the art that other types of media which are readable by a computer, such as magnetic cassettes, flash memory cards, digital video disks, Bernoulli cartridges, and the like, can also be used in the exemplary operating environment 2200, and further that any such media may contain computer-executable instructions for performing the methods of the present invention.

A number of program modules may be stored in the drives 2216-2222 and RAM 2212, including an operating system 2232, one or more application programs 2234, other program modules 2236, and program data 2238. The operating system 2232 may be any suitable operating system or combination of operating systems. By way of example, the application programs 2234 and program modules 2236 can include a database analysis system *and*/*or* an interactive dimensional model building system that utilizes data in accordance with an aspect of the present invention. Additionally, the program data 2238 can include input data for controlling *and*/*or* biasing a dimensional model in accordance with an aspect of the present invention.

A user can enter commands and information into the computer 2202 through one or more user input devices, such as a keyboard 2240 and a pointing device (e.g., a mouse 2242). Other input devices (not shown) may include a microphone, a joystick, a game pad, a satellite dish, wireless remote, a scanner, or the like. These and other input devices are often connected to the processing unit 2204 through a serial port interface 2244 that is coupled to the system bus 2208. but may be connected by other interfaces, such as a parallel port, a game port or a universal serial bus (USB). A monitor 2246 or other type of display device is also connected to the system bus 2208 *via* an interface, such as a video adapter 2248. In addition to the monitor 2246, the computer 2202 may include other peripheral output devices (not shown), such as speakers, printers, etc.

It is to be appreciated that the computer 2202 can operate in a networked environment using logical connections to one or more remote computers 2260. The remote computer 2260 may be a workstation, a server computer, a router, a peer device or other common network node, and typically includes many or all of the elements described relative to the computer 2202, although. for purposes of brevity, only a memory storage device 2262 is illustrated in FIG. 22. The logical connections depicted in FIG. 22 can include a local area network (LAN) 2264 and a wide area network (WAN) 2266. Such networking environments are commonplace in offices, enterprise-wide computer networks, intranets and the Internet.

When used in a LAN networking environment, for example, the computer 2202 is connected to the local network 2264 through a network interface or adapter 2268. When used in a WAN networking environment, the computer 2202 typically includes a modem (*e.g.*, telephone, DSL, cable, etc.) 2270, or is connected to a communications server on the LAN, or has other means for establishing communications over the WAN 2266, such as the Internet. The modem 2270, which can be internal or external relative to the computer 2202, is connected to the system bus 2208 via the serial port interface 2244. In a networked environment, program modules (including application programs 2234) *and*/*or* program data 2238 can be stored in the remote memory storage device 2262. It will be appreciated that the network connections shown are exemplary and other means (*e.g.*, wired or wireless) of establishing a communications link between the computers 2202 and 2260 can be used when carrying out an aspect of the present invention.

In accordance with the practices of persons skilled in the art of computer programming, the present invention has been described with reference to acts and symbolic representations of operations that are performed by a computer, such as the computer 2202 or remote computer 2260, unless otherwise indicated. Such acts and operations are sometimes referred to as being computer-executed. It will be appreciated that the acts and symbolically represented operations include the manipulation by the processing unit 2204 of electrical signals representing data bits which causes a resulting transformation or reduction of the electrical signal representation, and the maintenance of data bits at memory locations in the memory system (including the system memory 2206, hard drive 2216, floppy disks 2220, CD-ROM 2224, and remote memory 2262) to thereby reconfigure or otherwise alter the computer system's operation, as well as other processing of signals. The memory locations where such data bits are maintained are physical locations that have particular electrical, magnetic, or optical properties corresponding to the data bits.

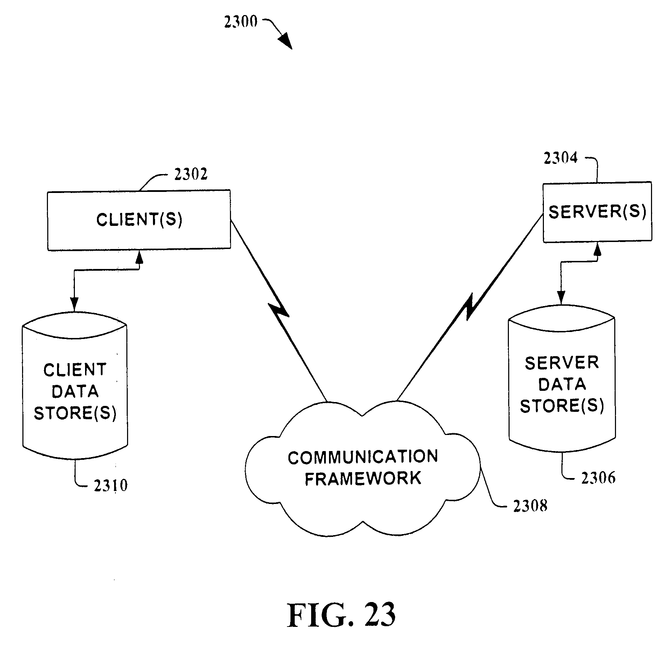

FIG. 23 is another block diagram of a sample computing environment 2300 with which the present invention can interact. The system 2300 further illustrates a system that includes one or more client(s) 2302. The client(s) 2302 can be hardware *and*/*or* software (*e.g.,* threads, processes, computing devices). The system 2300 also includes one or more server(s) 2304. The server(s) 2304 can also be hardware *and*/*or* software (*e.g.*, threads, processes, computing devices). The servers 2304 can house threads to perform transformations by employing the present invention, for example. One possible communication between a client 2302 and a server 2304 may be in the form of a data packet adapted to be transmitted between two or more computer processes. The system 2300 includes a communication framework 2308 that can be employed to facilitate communications between the client(s) 2302 and the server(s) 2304. The client(s) 2302 are operably connected to one or more client data store(s) 2310 that can be employed to store information local to the client(s) 2302. Similarly, the server(s) 2304 are operably connected to one or more server data store(s) 2306 that can be employed to store information local to the servers 2304.

In one instance of the present invention, a data packet transmitted between two or more computer components that facilitates data analysis is comprised of dimensional model analysis data, based, in part, on data from an automated structure labeling system utilizing simplified analysis heuristics for defining a dimensional model (such as an OLAP object, a ROLAP object, and a MOLAP object and the like) based on data interrelations from a relational data schema (such as a relational database), data from an automated model building system for constructing the dimensional model defined by the automated structure labeling system, data from an input to initiate *via* a single user action (such as data from a computer mouse click) such as the automated structure labeling system *and*/*or* the automated model building system, data from an output associated with an interface (such as data for a graphical user interface) to provide indications of data processing of the data analysis, *and*/*or* data from an input associated with an interface to influence data processing based, at least in part, on a user's preference of how to define a dimensional model *and*/*or* how to construct a dimensional model.

In another instance of the present invention, a computer readable medium storing computer executable components of a system for facilitating data analysis is comprised of an automated data analysis system that provides information associated with a data set, based, at least in part, upon data from an automated structure labeling system utilizing simplified analysis heuristics for defining a dimensional model (such as an OLAP object, a ROLAP object, and a MOLAP object and the like) based on data interrelations from a relational data schema (such as a relational database), data from an automated model building system for constructing the dimensional model defined by the automated structure labeling system, data from an input to initiate *via* a single user action (such as data from a computer mouse click) such as the automated structure labeling system *and*/*or* the automated model building system, data from an output associated with an interface (such as data for a graphical user interface) to provide indications of data processing of the data analysis, *and*/*or* data from an input associated with an interface to influence data processing based. at least in part, on a user's preference of how to define a dimensional model *and*/*or* how to construct a dimensional model.

It is to be appreciated that the apparatus, systems *and*/*or* methods of the present invention can be utilized in a data analysis scheme facilitating computer components and non-computer related components alike. Further, those skilled in the art will recognize that the apparatus, systems *and*/*or* methods of the present invention can be employed in a vast array of electronic related technologies, including, but not limited to, computers, servers *and*/*or* handheld electronic devices and the like.

What has been described above includes examples of the present invention. It is, of course, not possible to descnbe every conceivable combination of components or methodologies for purposes of describing the present invention, but one of ordinary skill in the art may recognize that many further combinations and permutations of the present invention are possible. Accordingly, the present invention is intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

## Claims

1. A data analysis system, comprising:
an automated structure labeling system utilizing simplified analysis heuristics for defining a dimensional model based on data interrelations from a relational data schema; and
an automated model building system for constructing the dimensional model defined by the automated structure labeling system.

2. The system of claim 1, further comprising:
a user interface component that allows a user to interact with at least one selected from the group consisting of the automated structure labeling system and the automated model building system.

3. The system of claim 2, the user interface component comprising a graphical user interface.

4. The system of claim 1, further comprising:
an input component that allows a user to initiate via a single user action at least one selected from the group consisting of the automated structure labeling system and the automated model building system.

5. The system of claim 4, the input component comprising a single computer mouse click.

6. The system of claim 1, the relational data schema comprising a relational database.

7. The system of claim 1, the dimensional model comprising at least one selected from the group consisting of an OLAP object, a ROLAP object, and a MOLAP object.

8. A data analysis method, comprising:
defining a dimensional model automatically based on data interrelations from a relational data schema utilizing simplified analysis heuristics.

9. The method of claim 8, further comprising:
building the dimensional model automatically after defining the dimensional model.

10. The method of claim 8, further comprising:
providing a means to allow a user to initiate via a single user action the defining of the dimensional model.

11. The method of claim 9, further comprising:
providing a means to allow a user to initiate via a single user action at least one selected from the group consisting of the defining of the dimensional model, the building of the dimensional model, and both the defining and building of the dimensional model.

12. The method of claim 8, further comprising:
providing at least one structure and at least one characteristic of the dimensional model interactively to a user.

13. The method of claim 12, the structure comprising at least one selected from the group consisting of at least one fact table, at least one degenerate table, and at least one dimension table.

14. The method of claim 12, the characteristic comprising at least one selected from the group consisting of at least one dimension, at least one attribute, at least one measure, and at least one measure group.

15. The method of claim 8, further comprising:
employing user inputs to facilitate in defining the dimensional model.

16. The method of claim 15, the user inputs comprising, at least in part, a user interaction level comprised of at least one selected from the group consisting of total automation, limited interaction, and full interaction modes.

17. The method of claim 9, further comprising:
employing user inputs to facilitate in building the dimensional model.

18. The method of claim 17, the user inputs comprising, at least in part, a user interaction level comprised of at least one selected from the group consisting of total automation, limited interaction, and full interaction modes.

19. The method of claim 8, the relational data schema comprising a relational database.

20. The method of claim 8, the defining of the dimensional model comprising:
labeling at least one structure of the dimensional model as at least one selected from the group consisting of a strong fact, a strong dimension, both a fact and a dimension, a dimension, and a fact.

21. The method of claim 20, the structure comprising a table.

22. The method of claim 20, the labeling based on at least one selected from the group consisting of:
strong facts comprising structures with only out arcs;
strong dimensions comprising at least one selected from the group consisting of structures with at least two in arcs. structures with one in arc from a dimension, and structures with one in arc from a fact structure and at least one selected from the group consisting of zero and one out arcs;
both fact and dimension comprising structures with one arc in from a fact structure and at least two arcs into a cluster containing dimensions labeled by starting from other fact structures; and
dimensions comprising structures with one in arc from a fact structure.

23. The method of claim 20, further comprising:
determining clusters of partitions by identifying structures having equivalent labeling for vertexes with only out arcs.

24. The method of claim 23, the equivalent labeling comprising identical primary key and identical cardinalities of columns with measure types not used in a foreign key/primary key pair.

25. The method of claim 23, further comprising:
grouping the partitions in detail clusters and analyzing as a single vertex.

26. The method of claim 9, the building the dimensional model comprising:
creating as many details as fact clusters;
storing a fact structure name in a detail in which it resides;
defining numeric columns inside a detail of a fact structure as measure columns and creating measures for the measure columns;
creating a count measure when no numeric columns exist inside a detail of a fact structure;
linking details to dimensions;
detecting hidden time dimensions inside a fact structure;
naming a dimensional model based on a detail having more measures than any other detail; and
building at least one selected from the group consisting of natural hierarchies and virtual hierarchies for at least one dimension.

27. The method of claim 8, the dimensional model comprising at least one selected from the group consisting of an OLAP object, a ROLAP object, and a MOLAP object.

28. A data analysis system, comprising:
means for utilizing simplified analysis heuristics for defining a dimensional model based on data interrelations from a relational data schema; and
means for building the dimensional model defined by the automated structure labeling system.

29. The system of claim 28, further comprising:
means to allow a user to interact with at least one selected from the group consisting of the automated structure labeling system and the automated model building system.

30. The system of claim 28, further comprising:
means for allowing a user to initiate with a single user action at least one selected from the group consisting of the automated structure labeling system and the automated model building system.

31. A user interface, comprising:
an interface adapted to communicate with an automated data analysis system;
at least one output associated with the interface to provide indications of data processing within the data analysis system relating to at least one characteristic; and
at least one input to influence the data processing based, at least in part, on a user's preference of at least one selected from the group consisting of a how to define a dimensional model and how to construct a dimensional model.

32. The interface of claim 31, the automated data analysis system comprising at least one selected from the group consisting of :
an automated structure labeling system utilizing simplified analysis heunstics for defining a dimensional model based on data interrelations from a relational data schema; and
an automated model building system for constructing the dimensional model defined by the automated structure labeling system.

33. The interface of claim 31, the output comprising at least one selected from the group consisting of dimensions, attributes, aggregate functions, table types, measures, and measure groups.

34. The interface of claim 31, the input comprising at least one selected from the group consisting of dimensions. attributes, aggregate functions, table types. measures, and measure groups.

35. The interface of claim 32, further comprising an input to initiate via a single user action at least one selected from the group consisting of the automated structure labeling system and the automated model building system.

36. The interface of claim 31, the interface comprising at least one selected from the group consisting of a graphical user interface and a text based interface.

37. A data packet transmitted between two or more computer components that facilitates data analysis, the data packet comprising dimensional model analysis data, based, in part, on at least one selected from the group consisting of:
data from an automated structure labeling system utilizing simplified analysis heuristics for defining a dimensional model based on data interrelations from a relational data schema;
data from an automated model building system for constructing the dimensional model defined by the automated structure labeling system;
data from an input to initiate *via* a single user action at least one selected from the group consisting of the automated structure labeling system and the automated model building system;
data from an output associated with an interface to provide indications of data processing of the data analysis; and
data from an input associated with an interface to influence data processing based.
at least in part, on a user's preference of at least one selected from the group consisting of a how to define a dimensional model and how to construct a dimensional model.

38. The data packet of claim 37, the input to initiate via the single user action comprising data from a computer mouse click.

39. The data packet of claim 37, the output associated with the interface comprising data for a graphical user interface.

40. The data packet of claim 37, the relational data schema comprising a relational database.

41. The data packet of claim 37, the dimensional model comprising at least one selected from the group consisting of an OLAP object. a ROLAP object, and a MOLAP object.

42. A computer readable medium storing computer executable components of a system for facilitating data analysis, comprising an automated data analysis system that provides information associated with a data set, based, at least in part, upon at least one selected from the group consisting of:
an automated structure labeling system utilizing simplified analysis heuristics for defining a dimensional model based on data interrelations from a relational data schema;
an automated model building system for constructing the dimensional model defined by the automated structure labeling system;
an input to initiate *via* a single user action at least one selected from the group consisting of the automated structure labeling system and the automated model building system;
an output associated with an interface to provide indications of data processing of the automated data analysis system; and
an input associated with an interface to influence automated data processing based, at least in part, on a user's preference of at least one selected from the group consisting of a how to define a dimensional model and how to construct a dimensional model.

43. The medium of claim 42, the input to initiate *via* the single user action comprising data from a computer mouse click.

44. The medium of claim 42, the output associated with the interface comprising data for a graphical user interface.

45. The medium of claim 42, the relational data schema comprising a relational database.

46. The medium of claim 42, the dimensional model comprising at least one selected from the group consisting of an OLAP object, a ROLAP object, and a MOLAP object.

47. A device employing the method of claim 8 comprising at least one from a group consisting of a computer, a server, and a handheld electronic device.

48. A device employing the system of claim 1 comprising at least one from a group consisting of a computer, a server, and a handheld electronic device.
